# EUROPEAN PATENT APPLICATION

(11) **EP 4 368 267 A2**
(43) Date of publication of application: **15.05.2024**
(21) Application number: 23204346.3
(22) Date of filing: 18.10.2023
(51) Int. Cl.: A63F 13/47, A63F 13/79

(54) **SYSTEM AND METHOD OF OPERATIONAL CONTROL**

(30) Priority: 08.11.2022 GB 202216600
(71) Applicant: Sony Interactive Entertainment Inc., Tokyo 108-0075 (JP)
(72) Inventor: MICHAILIDIS, Lazaros, London, W1F 7LP (GB); BARCIAS, Jesus, London, W1F 7LP (GB); HENDERSON, Christopher, London, W1F 7LP (GB)
(74) Representative: D Young & Co LLP

(57) **Abstract**

A method of user availability estimation comprises recording a timing of a plurality of first user sessions during in which the first user performs one or more tasks of a predetermined type, estimating a timing of a subsequent session of the first user based upon the recorded timings of the plurality of first user sessions, for the subsequent session of the first user, ordering for completion by the first user one or more tasks of the predetermined type, having respective durations, that fit within the estimated timing of the subsequent session.

## Description

### BACKGROUND OF THE INVENTION

### Field of the invention

The present invention relates to a system and method of operational control for a computer.

### Description of the Prior Art

Users of computers typically have a list of tasks that they want to complete, and typically an anticipated period of time in which to complete at least some of such tasks. The user will therefore normally proceed through the tasks in a particular order until the anticipated period of time is up, and for the last current task save progress for the user's next session.

However, this approach is inefficient if the last current task cannot be readily saved when the period of time is up, and/or requires a period of repetition when revisited in a subsequent session.

Consequently it can be inconvenient to the user, and inefficient for the purposes of completing the outstanding tasks.

The present invention seeks to mitigate this problem.

### SUMMARY OF THE INVENTION

Various aspects and features of the present invention are defined in the appended claims and within the text of the accompanying description.

In a first aspect, a method of user availability estimation is provided in accordance with claim 1.

In another aspect, a user availability estimation system is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a user availability estimation system in accordance with embodiments of the description.
- Figure 2 is a flow diagram of a user availability estimation method in accordance with embodiments of the description.

### DESCRIPTION OF THE EMBODIMENTS

A system and method of operational control for a computer are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

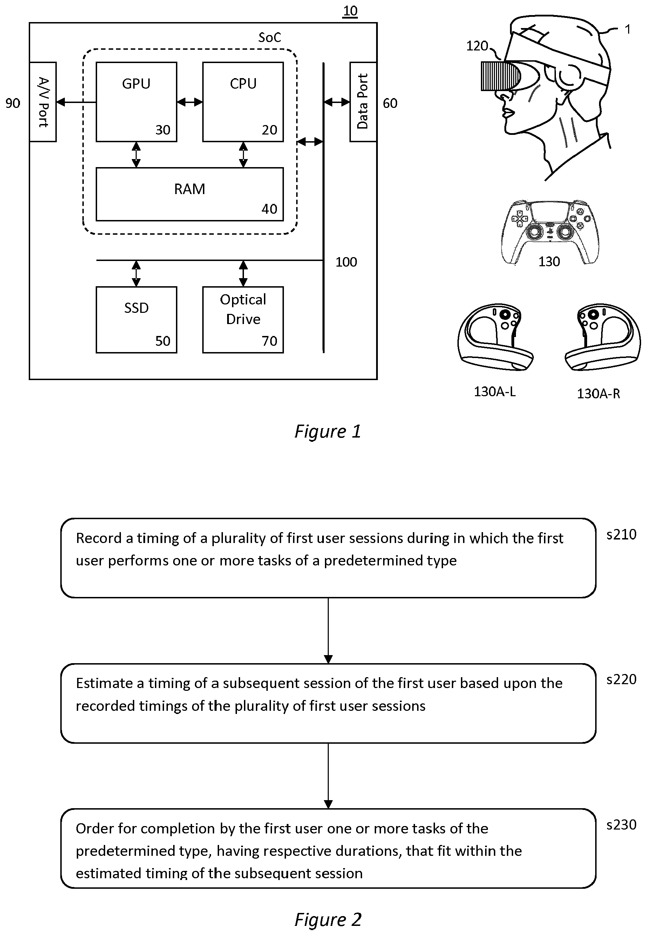

Referring now to the drawings, wherein like reference numerals designate identical or corresponding parts throughout the several views, Figure 1 shows an example of an entertainment system 10 such as a computer or console, and for the purposes of explanation the Sony^{®} PlayStation 5^{®} (PS5).

### System

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

### Ordering tasks - issues

In embodiments of the present description, a system and method of operational control for a computer estimates an order in which the user may most efficiently implement one or more tasks within an estimated available timeframe.

For purposes of explanation, the description uses an example of a video game, but it will be apparent that the principles herein are not limited to games, but apply to any application where a user may have a set of outstanding tasks to complete.

Many videogames operate quest systems or the like, in which a user encounters new quests (tasks or goals requiring some activity on the part of the user), and the user is typically able to select which quest or quests they actively engage with (a so-called 'active quest'). Typically but not necessarily the game will then modify some aspect of gameplay responsive to the active quest, for example showing markers relating to the quest on a map or in-world directions, spawning characters or dialogue options relevant to the quest, or the like.

The user is thus encouraged to complete the active quest, although typically they are not required to do so, and may encounter a new quest, or information or a location relevant to a different quest, that causes them to abandon the current active quest and start or resume a new one.

Nevertheless, to a first approximation a user will continue the quest to completion if they have the available time to do so.

Techniques exist to estimate how long it will take a user to complete a quest; for example completion times may be recorded for early users or quality assurance testers, to estimate an average completion time, or average completion times for different user demographics (for example by age).

More sophisticated estimates may take into account different styles of gameplay, for example whether the user is someone who is typically focused on a single quest or has a tendency to follow tangents; this may affect a confidence interval in the timing estimate such that for example whilst a quest may normally take 30 minutes, for a user who tends to follow tangents there is a greater probability that it will take 40 minutes. Hence for such a user if they only have 30 minutes of playtime available, this quest may not be suitable even though more focused people could play it in time.

In any event, it is possible to estimate how long it would take a user to complete a quest. Accordingly, the quests currently available to the user may be listed alongside their estimated completion times, and this this may be organised according to a ranking based at least in part upon their estimated completion time.

However, there is a risk that if the ranking biases the list toward easily or quickly completed quests, then this may result in an inefficient use of the user's time.

For example suppose that a game ranks quests according to estimated completion times as follows:
Quest A: 20 minutes
Quest B: 30 minutes
Quest C: 60 minutes

Meanwhile, the user has 90 minutes of playtime available, which they themselves may or may not be aware is the case. Meanwhile the quest listing system in the game is not aware of this.

If the user completes the quests in the provided order, and they will complete quests A and B in 50 minutes, but then will either choose not to start quest C because they do not have enough time remaining (40 rather than 60 minutes), or they will have their progress through quest C interrupted when they run out of time.

In either case, the result is unsatisfactory for the user; either their playtime session is truncated because they foresee that they cannot complete the quest, or the quest is interrupted when the playtime session (unexpectedly) ends. In this latter case, potentially the quest may need to be replayed to a greater or lesser extent in a subsequent playtime session, further reducing the efficiency with which the user plays the game (or performs the corresponding task in another application).

By contrast, if the quest listing system (or equivalently a quest selection system, if the quests are not expressly listed but rather presented as an evolving sequence within the game) could estimate the user's available playtime, then the system could rank or sequence quests according to their estimated completion times so as to most effectively fill the user's playtime.

### Estimation of playtime

Accordingly, in embodiments of the present description, a playtime estimation system is configured to estimate the duration of a current playtime session, and order (e.g. rank or sequence) quests (e.g. tasks or goals requiring some activity on the part of the user), themselves having an estimated completion time, to best fill the estimated available playtime.

This playtime estimation system is typically a component of so-called middleware, and may comprise a component within the operating system of the entertainment device (i.e. part of the OS or a helper app associated with the OS), and a standardised component provided as part of a software development kit and incorporated into the game / application, to enable the game to interact with the operating system in accordance with the techniques disclosed herein. As such the system as a whole is independent of the particulars of any individual game, but provides the estimation / ordering function described above to any game or application that uses it.

It will be appreciated that whilst referred to as a 'playtime' estimation system herein, the principle applies to estimating the time available for user to attempt to perform tasks, for the purposes of more efficiently listing or selecting different tasks with different known or expected durations.

In embodiments of the present description, the playtime estimation system builds a model of user playtime duration.

To a first approximation, the playtime estimation system records how long the user interacts with the entertainment device in each playtime session. This period may for example be from login to shut down, or from when a first game is started until shut down. Typically it is the period in which the user actively engages with the device to play, whether to play a single game or multiple games, within a single session. Again equivalently and more generally it is typically the period in which the user engages in the intended or primary type of activity.

Hence if the entertainment device operates in significantly different modes (for example also providing video/film streaming services, or a web browser, for example) then the period relating to game play may start/end when the user switches from/to the different mode of operation, even if the device stays on for both activities.

Over a plurality of sessions this approach would enable calculation of an average playtime session duration, but typically with a significant variance in the individual periods contributing to that average and hence a relatively high degree of error between the average and the duration of any one instance of play.

Hence to a second approximation, the playtime estimation system may again record how long the user interacts with the entertainment device in each playtime session, but compile statistics for different times of the day and/or days of the week.

Hence an estimate may be provided for morning sessions (e.g. before work), lunchtime sessions, and afternoon and/or evening sessions, and separately for weekday and weekend sessions. Other separate compilations may be made for holiday periods (e.g. school holidays) and national holidays (which to a first approximation may be treated in a similar manner to weekends).

More generally the system may cluster sessions according to their absolute time (e.g. by k-means clustering or similar) and add new sessions to the relevant cluster; in this way the system can learn the behaviour of the user and assign examples of playtimes to the relevant sets of playtimes. For example morning, lunch, after-school and after-dinner clusters may be seeded to initialise such a system, but this is not essential.

As a result, the system may generate a plurality of averages and/or other descriptive statistics (for example a corresponding distribution) for different times of day and/or days of the week that are more likely to be accurate estimates of the user's playtime within those respective periods, because they are able to more accurately reflect real-world constraints on the user's time at different times of day or days of the week.

To a third approximation, alternatively or in addition to the compiling of different estimates for different times of the day or days of the week, the means by which the play periods are described and estimated may also be refined.

For example, a user who plays early in the morning or at lunchtimes may have a relatively variable length of play in each of the sessions. However, the duration alone may not reflect that independent of when the user starts, they tend to stop at a relatively fixed time, for example shortly before they need to leave home to catch a train, or shortly before the end of a fixed lunch period. Hence whilst there may be considerable variability at the start of the session, there may be much less variability at the end.

Consequently alternatively or in addition to characterising the period of play, the system may characterise the start and/or end of a play session, typically in terms of absolute time, so as to determine whether there is a clear pattern either relating to the start and/or particularly the end of the play session.

Determining which of the historically measured playtime period and the start or end times is likely to be determinant in accurately predicting how long the current playtime session will continue may depend upon relative variability of these measurements. For example the estimated duration of a morning playtime session may have more than a threshold variance (or equivalently more than a threshold standard deviation). Meanwhile the estimated end time for the morning playtime session may have a less than a threshold variance or standard deviation. In this case, regardless of when the playtime session starts, the estimated playtime period may be based upon the average end time for the morning playtime session rather than for example the average duration of the morning playtime session. It will be appreciated that similarly the estimated playtime period may be based upon estimates of both the duration and the end time combined according to a weighting that reflects the relative variabilities of their historical data.

Conversely, some people may allocate themselves 45, 60, or 90 minutes of playtime in the day (or in the case of children, have such a duration allocated to them), and so the average period of play time may have less than a threshold variance or standard deviation, whilst the variance associated with the average start and end times (i.e. when play occurs) is likely to exceed such a threshold. In this case then the estimated playtime period may be based upon the average duration of the playtime session rather than the start or end time.

More generally the system may choose which of the average duration or the average end time is determinant of the current play session duration based on the relative variance associated with these averages, selecting the one which gives the smallest prediction error (e.g. in terms of standard deviation or similar).

Meanwhile the start time may be indicative of the length of a playtime session for example in the evening; whilst the start time and the end time may not be fixed, the start time may be indicative of the average duration of play; in this sense the start time may be thought of as a refinement of morning, lunch and evening time classifications - instead for example being hourly or half hourly classifications, or a continuous scale. Typically in this case the later the start time, the shorter the overall play as the user tends to be more fatigued the later in the evening they get. The system may determine a linear or nonlinear scalar between observed start times and observed play duration that best matches the historical data for the user, and use this to predict the duration of the current play session based upon the start time.

Hence more generally the system uses a statistical characterisation of historical playtime data to predict the duration of the current playtime session; the statistical characterisation may take into account when in the day and/or the week that a transaction occurs, and/or may take into account the variability of the duration of playtime session and/or the end time of the playtime session to determine whether to base the prediction primarily on historical duration data or historical end time data, or a weighted contribution of both.

The above predictions are based solely upon historical data relating to playtime sessions.

However to a fourth approximation (which can be combined with any one of the other three), the prediction may take into account modifiers relating to current environmental factors. These environmental factors may be in-game/app and/or in the real world.

In-game environmental factors may relate to the nature of the game; for example, different genres of game may be played on average for different periods of time, with first person shooter games for example being typically played for a different length of time to a role-playing adventure game. Similarly different modes of play may engage the user for different periods of time, with a single player adventure lasting longer than a multiplayer death-match. Meanwhile, virtual reality games tend to be played for a shorter period of time than games played on a TV, regardless of genre.

Some real-world environmental factors may also be discerned via in game data; for example the demographic of other players in a multiplayer death-match may be indicative of how long the current user engages with the game, with either certain demographics or demographics markedly different from the user themselves indicating that the gameplay may be shorter than normal. Similarly if there is more than one registered user of a device using the device in local co-op mode (for example siblings, or a parent and child), then optionally the statistics associated with both users can be compared and the shorter of the two predictions made for playtime length may be used on the assumption that when one party quits the other is very likely to as well. It will also be appreciated that any explicit timing controls (e.g. parental controls limiting play time) can be factored in to the estimation, at least as a maximum available time that the estimate will not exceed.

Meanwhile some real-world environmental factors may optionally be considered, which will be ascertained from other sources. Factors that may affect the length of a current playtime session may include the weather, for example; if it is very cold or very wet outside the user may be more likely to continue playing with the device for longer than is historically the case.

Other aspects of timing may also be considered real-world environmental factors, such as the time of year (e.g. whether it is light or dark outside), and whether the user is in a location that does or does not currently have daylight savings time (optionally the timing estimates described herein can be shifted according to such clock changes, e.g. when grouping data for afternoon or evening sessions).

Optionally, the system may have access to a user's diary, with their permission, and identify whether the user has a particular commitment on that day which is likely to cause them to quit to meet the commitment. Other predictors similar to a diary may be considered; for example if the system has access to a user's TV schedule, it may note when a program marked as a user favourite is due to start, and assume the user is likely to quit beforehand. Optionally such external reminders may only be considered if they fall within a predetermined range of an estimated play period according to one of the first to fourth approximations; in other words, if historic behaviour suggests the user will stop after an average period or at an average time that is within a threshold period of an actual time noted as relevant to the user (either a fixed time such as 5 or 10 minutes, or a threshold related to the variance of the end of the estimated play period, such as 0.5 or 1 SD), then the system can assume that the actual noted time will be when the user stops play, or needs to have stopped play for (i.e. slightly earlier, such as 1 or 2 minutes). Meanwhile if the actual noted time falls outside the threshold period it may be assumed that the user is not concerned with this noted time (e.g. the favourite program is being recorded, or the diary event is in fact just a general reminder).

As noted above, optionally the threshold period can be responsive to the variance associated with the average period or end time predicted by the system - hence the less certain of the play period the system is, the more likely it is to rely on externally noted times, where available.

Clearly where there is a low variance end time that consistently encompasses a noted time (e.g. 'Leave for work') then the system can estimate a high confidence for the end time and hence also for the available play period.

Optionally, an additional source of information to estimate a play period is a corpora of other users.

While first compiling information to estimate a specific user's availability for a given session, it may be useful to use estimates based on similar users who have already compiled sufficient information. Such users may for example be chosen based on similar demographics (age, gender, nationality) as these can affect availability patterns, and potentially also based on similar locations (e.g. to reflect similar commuting patterns or dependencies, similar weather influences, and the like). The initial estimates may thus be selected based on data from one other user who appears to be a close match, or a combination (average and/or other statistical analysis such as variance) of date from multiple similar users. The estimate from such other user(s) may simply replace an estimate from the current user's data until that data is sufficient, or where the system uses a last-N data points approach (i.e. a rolling average) for any given element of the estimation process, then the N data points may be initially provided using data from one or more similar users to boot-strap the current user's system - the current user's system will then gradually replace the initially provided data over N sessions.

### Ordering strategy

Revisiting the example tasks A, B and C referred to previously, the playtime estimation system may now estimate that the user has 90 minutes playtime available.

In this case, it is then clear that, to a first approximation, the best ordering of the tasks is Quest C: 60 minutes followed by Quest B: 30 minutes, which totals 90 minutes. Doing the longer quest first is also likely to be a preferable strategy because it is likely to also have the greatest variance in execution time. It may be that quest C takes 70 minutes, in which case potentially the system could switch to listing or selecting Quest A: 20 minutes for the remainder of the estimated time available.

To a second approximation, the playtime estimation system may take account of the variance associated with the estimated playtime (e.g. duration and/or end time) in order to provide a 'safer' listing or selection of activities. For example, the playtime estimation system may use the estimated time minus some or all of a standard deviation in the average (or other statistical analysis) upon which the estimate was based. Hence for example if the estimate was 90 minutes with a standard deviation within ±10 minutes, then the system may list or select Quest C: 60 minutes followed by Quest A: 20 minutes to total 80 minutes, so that the tasks are more likely to be completed (i.e. the tasks are robust to errors in the estimated available time up to 1 SD from the average). The system may use for example 0.25, 0.5, 0.75, 1, or 1.5 SDs to hedge against overestimation of the available time. Of course, consistent overestimation will at least in part be corrected by the average time coming down as a result.

To a third approximation, the playtime estimation system may also take account of any variance or error margin associated with the time taken to complete the tasks themselves; whilst the present application assumes that the task duration is known, it will be appreciated that this may also be a variable period, and may for example be estimated based on the completion times recorded for other users. Again, an average and variance may be determined to a first approximation. Again, the corpus of other users from which this average and variance are determined may be a subset having similar demographics, locations, and the like to the current user. Similarly, the user's historical performance of tasks compared to their stated or estimated time may be taken into account (for example whether the user consistently takes less time than expected, consistently more time, and/or their variance in completion time with respect to expected time - i.e. do they typically take an amount of time similar to that estimate (low variance) or is their completion time less predictable (higher variance).

Any variance in the expected task completion time, either based on a corpus of other users for the current task and/or on the historical completion of other tasks by the current user, can thus optionally be factored into the ordering strategy to provide a 'safer' listing or selection either alternatively or in addition to any variance in the estimated user availability.

Hence for example if task A has a variability within a corpus of similar users such that 1 standard deviation equals ±10 minutes, then then the system may list or select Quest C: 60 minutes (+10 minutes variance for safety) followed by Quest A: 20 minutes to total 90 minutes.

If the user only takes 60 minutes, or indeed 50 minutes, to complete quest C, then the playtime estimation system can re-estimate the tasks for the remaining estimated available time.

Finally where both variance in estimated available time and variance in task execution time are both available, these can be considered together. Simply adding the variances together (for example for 1 SD for each) is the safest approach but may rule out some options that could have been completed in time. Hence optionally a buffer period corresponding to the mean of the variance in estimated available time and variance in task execution time may be calculated for each task and added to the effective task duration, instead of using the variances in the duration estimates in another way.

Hence in a final example, if the estimated available time had a small variance end time of 08:30 ±5 minutes (e.g. it was a morning session and the user predictably quit to go to work), meaning the available play time was 90 minutes ±5 minutes, and task C had an estimated completion time of 60 minutes ±10 minutes whilst task B had an estimated completion time of 30 minutes ±5 minutes and task a had an estimated completion time of 20 minutes ±10 minutes, then the effective calculation could be based on:
90 minutes available, and task C will take 67.5 minutes, task B 35 minutes and Task A 27.5 minutes.

In this case, The system may initially conclude that either only task C or only tasks B and A can be completed within the 90 minutes available. The system may then inform the user of this, or inform the user that they would need to perform at least one of the tasks in a quick/focussed manner to fully utilise their available time. The system than then re-estimate the tasks once the first task has been completed for the remaining available time.

Finally, it will be appreciated that the above may not be the only determinant of what is listed or selected for a user. For example quest ranking according to completion of major goal, rank of quest (main or side quest etc.), quest/object dependency between quests, historic user preference, or the like, may optionally also contribute to a listing or selection order.

However in this case then the availability estimate (optionally minus a variance such as 0.5 or 1 SD of time) and optionally task time estimates (optionally including variances such as 0.5 or 1 SD of additional time) may be used to rule out tasks or candidate lists or schedules of tasks calculated according to other metrics that are unlikely to be completed in the available time.

### Variants

In the description, reference has been made to using averages and optionally variance (or equivalently standard deviation) to estimate timings (e.g. user availability duration and/or end time, and/or task duration). However alternatively or in addition to standard statistical techniques, the user availability duration and/or end time and optionally task duration may be estimated using a machine learning 'ML' model. As a non-limiting example a regression ML model (for example: Gradient Boosted Regression, Support Vector Regression or Random Forest) may be used to output one or more such estimations.

Such an ML model can be trained on the first user's prior timings, for example using timing data previously described in relations to averages and variances. Optionally the ML may be previously trained on other user data to bootstrap its functionality, and then re-trained using the first user's timing data.

### Summary

Turning now to Figure 2, in a summary embodiment of the present description, a method of operational control comprises a method of user availability estimation that in turn comprises the following steps.

In a first step s210, recording a timing of a plurality of first user sessions during in which the first user performs one or more tasks of a predetermined type; as described elsewhere herein, timing may comprise one or more selected from the list consisting of the duration of a respective session, the end time of a respective session, and indeed the start time of a respective session. Optionally the timings of the first user sessions may be supplemented with timings of one or more other users initially to boot-strap the system.

In a second step s220, estimating a timing of a subsequent session of the first user based upon the recorded timings of the plurality of first user sessions, as described elsewhere herein.

Then, for the subsequent session of the first user,

In a third step s230, ordering for completion by the first user one or more tasks of the predetermined type, having respective durations, that fit within the estimated timing of the subsequent session; as described elsewhere herein ordering may comprise listing and/or selecting tasks for the first user.

The operational control may then optionally implement the ordered tasks (for example selecting / activating them in the ordered sequence, optionally with a re-estimation between tasks), or modify operation of the system in some other manner, for example pre-loading or downloading assets (data, graphics, or other assets) in anticipation of the next task, or in the case of a task with a physical component, acquiring, arranging and/or instructing the user upon the physical component, or may interact with the user to inform them of the order, for example to obtain consent to proceed from the user, or to allow the user to choose the precise start time (if the user then delays starting for a period sufficient to cause the current ordering to no longer fit the estimated available time, the system may re-preform the method).

It will be apparent to a person skilled in the art that variations in the above method corresponding to operation of the various embodiments of the apparatus as described and claimed herein are considered within the scope of the present invention, including but not limited to that:
- the step of estimating comprises calculating an average of the timing of the plurality of first user sessions, the estimate being based upon the average, as described elsewhere herein;
   - in this instance, optionally the step of estimating a timing of the subsequent session comprises calculating a variance or standard deviation of the timing of the plurality of first user sessions, the estimate being based upon the average and the variance or standard deviation, as described elsewhere herein;
- the steps of recording a plurality of first user sessions and estimating a timing of a subsequent session are with respect to one or more selected from the list consisting of a predetermined part of the day (e.g. morning, lunch, afternoon, or evening, a period established by a clustering algorithm, an hourly division, or as a function of absolute time), and one or more days of the week (e.g. weekdays and weekends), as described elsewhere herein;
- the timing comprises one or more selected from the list consisting of the duration of a respective session, and the end time of a respective session, as described elsewhere herein;
   - in this instance, optionally the step of estimating a timing of a subsequent session preferentially uses end time timings over duration timings if the variance or standard deviation of the plurality of recorded end time timings is below a predetermined threshold, as described elsewhere herein;
- in the method the tasks are part of a videogame, and estimating a timing of a subsequent session of the first user is further based upon one or more game factors selected from the list consisting of the type of game (e.g. the genre), the mode in which the game is played (e.g. single player, multiplayer, local co-op, etc.) and the type of display the game is output upon (e.g. TV or VR headset), as described elsewhere herein;
- estimating a timing of a subsequent session of the first user is further based upon one or more user factors selected from the list consisting of one or more aspects of the demographics of the user, and one or more aspects of the demographics of one or more other task participants, as described elsewhere herein;
- estimating a timing of a subsequent session of the first user is further based upon one or more environmental factors selected from the list consisting of the local weather, and scheduled events relevant to the first user, as described elsewhere herein;
- the step of estimating a timing of a subsequent session of the first user uses the timing of a scheduled event relevant to the first user for estimating the end time of the subsequent session if that scheduled event occurs within a threshold period of an initially estimated end time of the subsequent session, as described elsewhere herein;
- the step of ordering for completion by the first user one or more tasks of the predetermined type comprises ordering for completion one or more tasks, from a plurality of candidate tasks, that most fully occupies the available timing of the subsequent session, as described elsewhere herein; and
- the ordering is further based upon a variance or standard deviation in the respective duration of the candidate tasks, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, a user availability estimation system (such as entertainment device 10) comprises the following.

Firstly a memory (40, 50) configured (for example by suitable software instruction to a controlling processor such as CPU 20) to record a timing of a plurality of first user sessions during in which the first user performs one or more tasks of a predetermined type, as described elsewhere herein.

Secondly an estimation processor (for example CPU 20) configured (for example by suitable software instruction) to estimate a timing of a subsequent session of the first user based upon the recorded timings of the plurality of first user sessions, as described elsewhere herein.

Thirdly, an ordering processor (for example CPU 20) configured (for example by suitable software instruction), for the subsequent session of the first user, to order for completion by the first user one or more tasks of the predetermined type, having respective durations, that fit within the estimated timing of the subsequent session, as described elsewhere herein.

Instances of this summary embodiment implementing the methods and techniques described herein (for example by use of suitable software instruction) are envisaged within the scope of the application, including but not limited to that the ordering processor is configured to order for completion one or more tasks, from a plurality of candidate tasks, that most fully occupies the available timing of the subsequent session, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of user availability estimation, comprising:
recording a timing of a plurality of first user sessions during in which the first user performs one or more tasks of a predetermined type;
estimating a timing of a subsequent session of the first user based upon the recorded timings of the plurality of first user sessions;
and for the subsequent session of the first user,
ordering for completion by the first user one or more tasks of the predetermined type, having respective durations, that fit within the estimated timing of the subsequent session.

2. The method of claim 1, in which
the step of estimating comprises calculating an average of the timing of the plurality of first user sessions, the estimate being based upon the average.

3. The method of claim 2, in which
the step of estimating a timing of the subsequent session comprises calculating a variance or standard deviation of the timing of the plurality of first user sessions, the estimate being based upon the average and the variance or standard deviation.

4. The method of claim 1 or 2, in which
the steps of recording a plurality of first user sessions and estimating a timing of a subsequent session are with respect to one or more selected from the list consisting of:
i. a predetermined part of the day; and
ii. one or more days of the week.

5. The method of any preceding claim, in which
the timing comprises one or more selected from the list consisting of:
i. the duration of a respective session; and
ii. the end time of a respective session.

6. The method of claim 5, in which:
the step of estimating a timing of a subsequent session preferentially uses end time timings over duration timings if the variance or standard deviation of the plurality of recorded end time timings is below a predetermined threshold.

7. The method of any preceding claim, in which
the tasks are part of a videogame, and
estimating a timing of a subsequent session of the first user is further based upon one or more game factors selected from the list consisting of:
i. the type of game;
ii. the mode in which the game is played; and
iii. the type of display the game is output upon.

8. The method of any preceding claim, in which
estimating a timing of a subsequent session of the first user is further based upon one or more user factors selected from the list consisting of:
i. one or more aspects of the demographics of the user; and
ii. one or more aspects of the demographics of one or more other task participants.

9. The method of any preceding claim, in which
estimating a timing of a subsequent session of the first user is further based upon one or more environmental factors selected from the list consisting of:
i. the local weather; and
ii. scheduled events relevant to the first user.

10. The method of any preceding claim, in which
the step of estimating a timing of a subsequent session of the first user uses the timing of a scheduled event relevant to the first user for estimating the end time of the subsequent session if that scheduled event occurs within a threshold period of an initially estimated end time of the subsequent session.

11. The method of any preceding claim, in which
the step of ordering for completion by the first user one or more tasks of the predetermined type comprises:
ordering for completion one or more tasks, from a plurality of candidate tasks, that most fully occupies the available timing of the subsequent session.

12. The method of any preceding claim, in which
the ordering is further based upon a variance or standard deviation in the respective duration of the candidate tasks.

13. A computer program comprising computer executable instructions adapted to cause a computer system to perform the method of any one of the preceding claims.

14. A user availability estimation system (10), comprising:
a memory (40, 50) configured to record a timing of a plurality of first user sessions during in which the first user performs one or more tasks of a predetermined type;
an estimation processor (20) configured to estimate a timing of a subsequent session of the first user based upon the recorded timings of the plurality of first user sessions;
and for the subsequent session of the first user,
an ordering processor (20) configured to order for completion by the first user one or more tasks of the predetermined type, having respective durations, that fit within the estimated timing of the subsequent session.

15. The user availability estimation system of claim 14, in which
the ordering processor is configured to order for completion one or more tasks, from a plurality of candidate tasks, that most fully occupies the available timing of the subsequent session.
